# EUROPEAN PATENT APPLICATION

(11) **EP 1 383 027 A2**
(43) Date of publication of application: **21.01.2004**
(21) Application number: 03014387.9
(22) Date of filing: 26.06.2003
(51) Int. Cl.: G06F 1/16

(54) **Expansion unit and electronic-apparatus system**

(30) Priority: 28.06.2002 JP 2002190895
(71) Applicant: Kabushiki Kaisha Toshiba, Tokyo (JP)
(72) Inventor: Azuchi, Satoshi, Toshiba Corporation, Intellectual, Tokyo 105-8001 (JP)
(74) Representative: Henkel, Feiler, Hänzel

(57) **Abstract**

An electronic-apparatus system according to the present invention includes a main device (10), an expansion unit (20) which expands the function of the main device (10) and a cradle (30) in which the main device (10) is held when the main device transmits/receives data to/from a personal computer. A connector (13) for connecting a data-synchronizing signal line and a function-expanding signal line is provided on the bottom of the main device (10). A connector (21) and a connector (31), which are fitted into the connector (13), are provided in the expansion unit (20) and cradle (30), respectively. The expansion unit (20) has a connector (22) having the same shape as that of the connector (13). Thus, the cradle (30) can be used with the expansion unit (20) connected to the main device (10).

## Description

The present invention relates to an expansion unit for expanding the function of portable electronic apparatus such as a personal digital assistant (PDA) and an electronic-apparatus system including the expansion unit and electronic apparatus. More specifically, the invention relates to an expansion unit and an electronic-apparatus system, which decrease the number of connectors through the shared use of a connector for both data synchronization and function expansion and which allow a plurality of expansion units to be added in multiple stages through a single connector with the connector available for data synchronization.

In recent years, battery-operable portable electronic apparatus such as a PDA has become widespread. In general, the main body of this type of electronic apparatus has only the fundamental function to prevent its portability from deteriorating and an expansion unit for expanding the function can be connected to the electronic apparatus when the need arises.

For example, in the electronic apparatus disclosed in Jpn. Pat. Appln. KOKAI Publication No. 6-195153, a plurality of option modules can be connected through a single additionally optional connector by connecting the option modules in series to the additionally optional connector. According to this apparatus, even though a number of expansion options are mounted, a number of connectors need not be provided and thus the electronic apparatus can be prevented from increasing in size.

The above electronic apparatus always includes a connector for transmitting/receiving data to/from a so-called personal computer such as a desktop one and a notebook one. In order to downsize the electronic apparatus further, recently, a connector for connecting signal lines for data synchronization and a connector for connecting signal lines for function expansion have been combined into one.

However, the above-described connector causes a problem that one of transmission/reception of data to/from a personal computer and function expansion has only to be exclusively used. Furthermore, the above Jpn. Pat. Appln. KOKAI Publication No. 6-195153 teaches connecting a plurality of expansion units to an additionally optional connector that is provided separately and does not have any concept of relaying a data-synchronizing signal line that is not used for function expansion. If, therefore, the electronic apparatus of the Publication is adopted, a plurality of expansion units can be used simultaneously, but no data can be transmitted to or received from the personal computer while the expansion units are connected.

An embodiment of the present invention may provide an expansion unit and an electronic-apparatus system that allow a plurality of expansion units to be connected in multiple stages through a single connector with the connector available for data synchronization.

According to an aspect of the invention, it provides an expansion unit that is detachably capable to be connected to electronic apparatus having a first connector, comprising a second connector electrically connected to the first connector, a third connector whose shape is equal to that of the first connector and which is connected to other electronic apparatus being different from the electronic-apparatus, and a signal line which electrically connects the second connector and the third connector together.

The another aspect of the invention, it provides an electronic-apparatus system comprising electronic apparatus and a first expansion unit detachably connected to the electronic apparatus, the electronic apparatus comprising a first connector used for both data communications with other electronic apparatus and function expansion of the electronic apparatus, and-the first expansion unit comprising a second connector electrically connected to the first connector, a third connector having a same shape as that of the first connector and being connectable to the other electronic apparatus, and a first signal line which elctrically connects the first connector and the second connector together.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an external view of an electronic-apparatus system according to an embodiment of the present invention;
FIGS. 2A and 2B are diagrams each showing a connection mode of the electronic-apparatus system according to the embodiment of the present invention;
FIG. 3 is a diagram showing an example of a structure of signal lines formed in an expansion unit of the electronic-apparatus system shown in FIGS. 1 and 2A and 2B; and
FIG. 4 is a block diagram showing an example of use of the electronic-apparatus system according to the embodiment of the present invention.

The embodiments of the present invention will be described below with reference to the drawings.

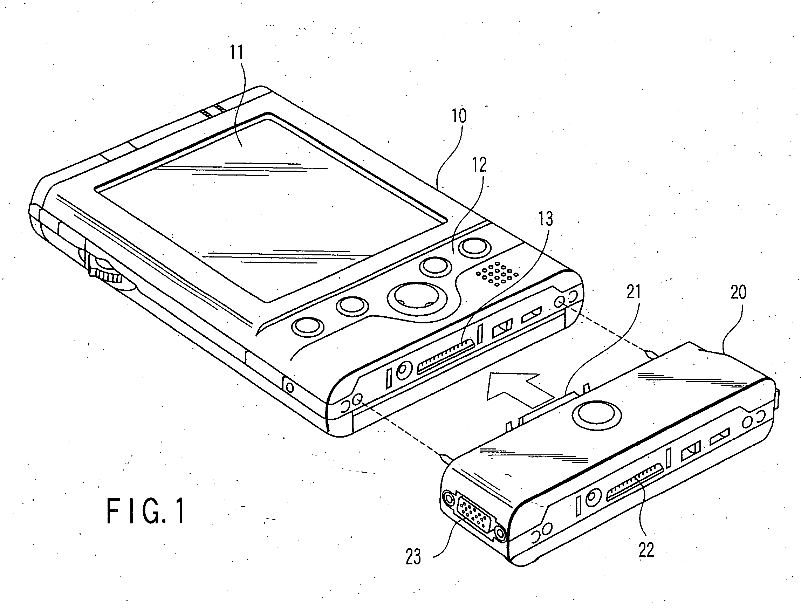

FIG. 1 is an external view of an electronic-apparatus system according to the embodiment of the present invention.

As shown in FIG. 1, the electronic-apparatus system includes a main device 10 that is called, for example, a PDA and an expansion unit 20 for expanding the function of the main device 10. An LCD 11 for displaying data and operating buttons 12 for inputting data are arranged as a user interface on the front of the main device 10. A connector 13 for connecting both a data-synchronizing signal line and a function-expanding signal line to a personal computer is formed on the bottom of the main device 10. In other words, the connector 13 is a shared connector serving to connect both the data-synchronizing signal line and the function-expanding signal line in order to reduce the number of connectors. Thus, the main device 10 is decreased in size and cost.

The expansion unit 20 includes a connector 22 having the same shape as that of the connector 13 of the main device 10 as well as a connector 21 that is fitted to the connector 13. In other words, another expansion unit 20 can be connected in series to the expansion unit 20. The expansion unit 20 includes a group of signal lines for deriving a signal line, which is connected through the connector 21, from the connector 22. Thus, the main device 10 can transmit/receive data to/from a personal computer even though the expansion unit 20 is connected to the main device 10.

The expansion unit 20 shown in FIG. 1 is used to add a function of displaying an image, which is displayed on the LCD 11, on an external display device such as a cathode ray tube (CRT). To do so, a connector 23 for connecting the expansion unit 20 to the external display device through a cable is provided on one side of the expansion unit 20.

The area of the surface of the expansion unit 20 on which the connector 21 is provided is substantially the same as that of the bottom of the main device 10. Further, the width of the expansion unit 20 is substantially the same as that of the main device 10 and so is the thickness.

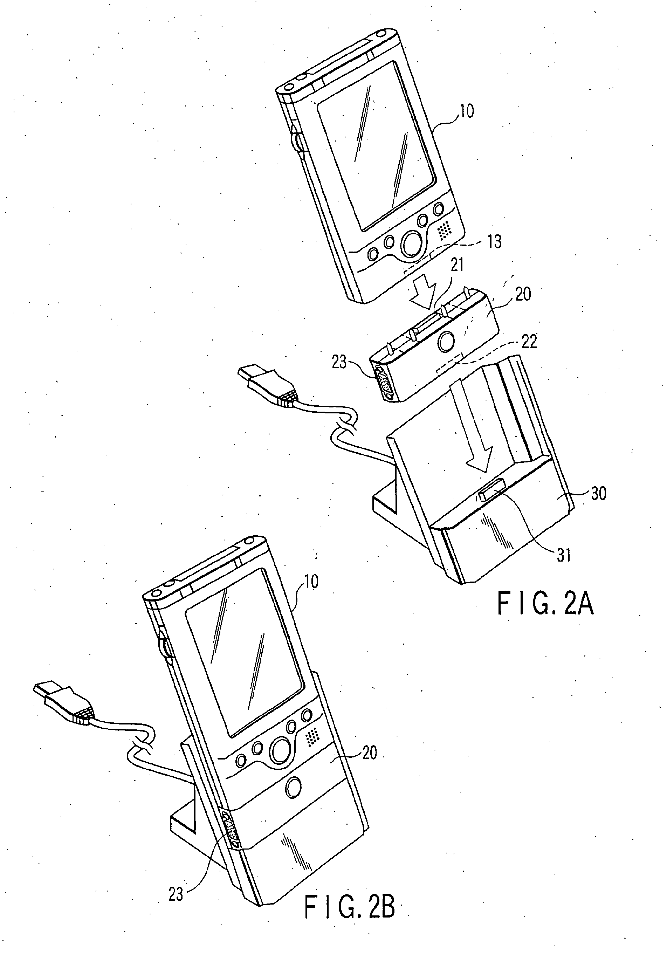

FIGS. 2A and 2B are diagrams showing a connection mode of the electronic-apparatus system.

In FIGS. 2A and 2B, reference numeral 30 indicates a cradle in which the main device 10 is held when data is transmitted to/received from a personal computer. Like the expansion unit 20, the cradle 30 has a connector 31 that is fitted into the connector 13 of the main device 10. Since the connector 22 of the expansion unit 20 has the same shape as that of the connector 13 as described above, the connector 31 of the cradle 30 is also fitted into the connector 22.

In the electronic-apparatus system described above, a connector for connecting the data-synchronizing signal line and a connector for connecting a function-expanding signal line are combined into a single shared connector (connector 13). However, the expansion unit 20 and cradle 30 can be used simultaneously, not exclusively or selectively.

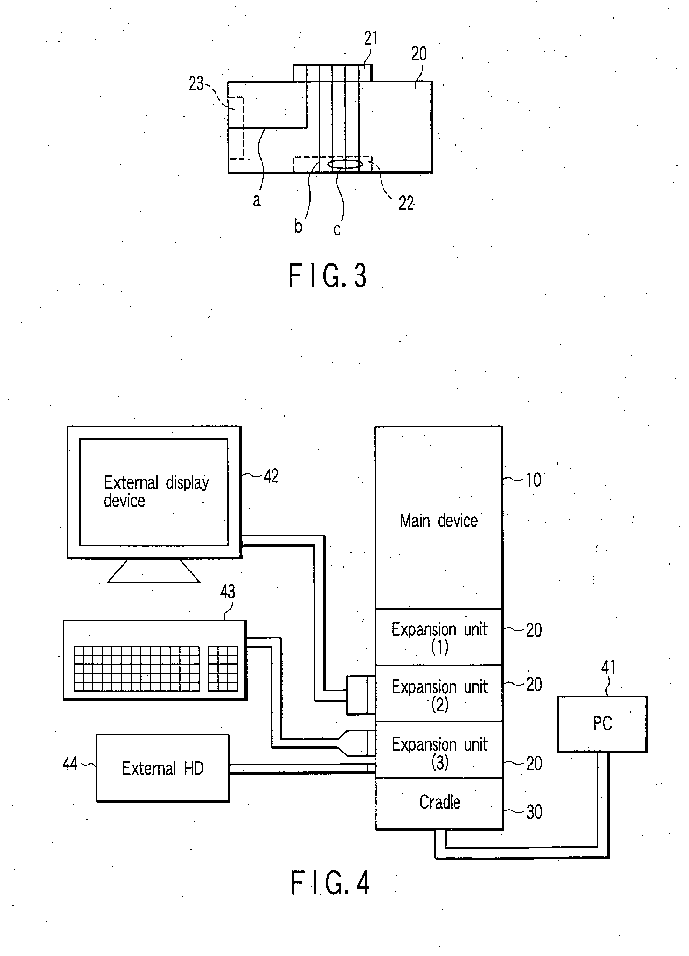

FIG. 3 is a diagram showing an example of a structure of the group of signal lines formed in the expansion unit 20 shown in FIGS. 1 and 2A and 2B.

In FIG. 3, reference symbol a indicates a signal line for outputting display data to an external display device, which relays a line between the connectors 21 and 23. Reference symbol b denotes a signal line for data synchronization with a personal computer, which relays a line between the connectors 21 and 22. Reference symbol c indicates,'for example, a power supply line and other signal lines that relay a line between the connectors 21 and 22.

The signal line b relays a data-synchronizing signal line, which is derived from the main device 10, from the connector 21 of the expansion unit 20 to the connector 22 thereof; therefore, the expansion unit 20 can be used as shown in FIG. 4. In other words, a function of increasing a memory capacity while data is being transmitted to/received from a personal computer 41 via the cradle 30 or a function of a global positioning system (GPS) for measuring the current position is added by the first expansion unit 20. A function of displaying an image, which is displayed on the LCD 11, on an external display device 42 is added by the second expansion unit 20. Further, a function of inputting data through an external keyboard or gaining, access to an external magnetic disk drive (HDD) 44 is added by the third expansion unit 20.

As described above, the- electronic-apparatus system reduces the number of connectors by the shared use of a connector for both data synchronization and function expansion and allows a plurality of expansion units 20 to be added in multiple stages through a singleconnector with the connector available for data synchronization.

## Claims

1. An expansion unit (20) that is detachably capable to be connected to electronic apparatus (10) having a first connector (13), **characterized by** comprising:
a second connector (21) electrically connected to the first connector;
a third connector (22) whose shape is equal to that of the first connector and which is connected to other electronic apparatus being different from the electronic apparatus; and
a signal line (b,c) which electrically connects the second connector and the third connector together.

2. The expansion unit according to claim 1, **characterized by** further comprising a fourth connector (23) which is electrically connected to the second connector and whose shape is different from that of the first connector.

3. The expansion unit according to claim 1, **characterized by** further comprising storage unit, which is electrically connected to the second connector, for storing data to be processed by the electronic apparatus.

4. The expansion unit according to claim 2, which has a function of transferring display data to an external display device that is connected to the expansionunit through the fourth connector.

5. The expansion unit according to claim 1, **characterized in that** the electronic apparatus has a first surface on which the first connector is provided and the expansion unit has a second surface on which the second connector is provided, the second surface having substantially a same area as that of the first surface.

6. The expansion unit according to claim 1, which has substantially a same thickness measurement as that of the electronic apparatus.

7. The expansion unit according to. claim 1, which has substantially a same width measurement as that of the electronic apparatus.

8. An electronic-apparatus system having an electronic apparatus (10) and a first expansion unit (20) detachably connected to the electronic apparatus,
the electronic apparatus **characterized by** comprising a first connector (13) used for both data communications with other electronic apparatus and function expansion of the electronic apparatus, and
the first expansion unit **characterized by** comprising:
a second connector (21) electrically connected to the first connector;
a third connector (22) having a same-shape as that of the first connector and being connectable to the other electronic apparatus; and
a first signal line (b,c) which electrically connects the first connector and the second connector together.

9. The electronic-apparatus system according to claim 8, **characterized by** further comprising a second expansion unit having
a fourth connector electrically connected to one of the first connector and the third connector;
a fifth connector having a same shape as that of the first connector and connectable to the electronic apparatus; and
a a second signal line which electrically connects the fourth connector and the fifth connector together, and
the second expansion unit is selectively connectable to the first expansion unit and the electronic apparatus.

10. The electronic-apparatus system according to claim 8, **characterized by** further comprising a data synchronizing unit (30) connected to other electronic apparatus and capable of synchronizing data, the data synchronizing unit being selectively connectable to the first connector and the third connector which connects the electronic apparatus and the first expansion unit.

11. The electronic-apparatus system according to claim 9, **characterized by** further comprising a data synchronizing unit (30) connected to other electronic apparatus and capable of synchronizing data, the data synchronizing unit being selectively connectable to the first connector, the third connector which connects the electronic apparatus and the first expansion unit, and the fifth connector which connects the electronic apparatus, the first expansion unit and the second expansion unit.

12. The electronic-apparatus system according to claim 8, **characterized in that** the first expansion unit further comprises a sixth connector whose shape differs from that of the first connector.

13. The electronic-apparatus system according to claim 8, **characterized in that** the first expansion unit further comprises storage unit which stores information of the electronic apparatus.

14. The electronic-apparatus system according to claim 12, **characterized in that** the first expansion unit transfers display data to an external display device through the sixth connector.

15. The electronic-apparatus system according to claim 8, **characterized in that** the electronic apparatus has a first surface on which the first connector is provided and the first expansion unit has a second surface on which the second connector is provided, the first surface and the second surface having substantially a same area.

16. The electronic-apparatus system according to claim 8, **characterized in that** the electronic apparatus and the first expansion unit have substantially a same thickness measurement.

17. The electronic-apparatus system according to claim 8, **characterized in that** the electronic apparatus and the first expansion unit have substantially a same width measurement.

18. The electronic-apparatus system according to claim 9, **characterized in that** the electronic apparatus has a first surface on which the first connector is provided and the first expansion unit has a second surface on which the second connector is provided and a fourth surface on which the fourth connector is provided, the first surface, the second surface, the third surface and the fourth surface having substantially a same area.
